# EUROPÄISCHE PATENTSCHRIFT

(11) **EP 0 298 239 B1**
(45) Veröffentlichungstag und Bekanntmachung des Hinweises auf die Patenterteilung: **03.03.1993**
(21) Anmeldenummer: 88108296.0
(22) Anmeldetag: 25.05.1988
(51) Int. Cl.: B23Q 11/00

(54) **Verfahren zur Kontrolle der Position eines Werkzeugträgers in dem Werkzeughalter einer Werkzeugwechseleinrichtng sowie zur Reinigung der Kupplungsflächen zwischen Werkzeughalter und Werkzeugträger und Vorrichtung zur Durchführung dieses Verfahrens**
Method and device for controlling the position of a tool holder in the tool support of a tool-changing device and for cleaning the coupling surfaces between the tool support and the tool holder
Procédé et dispositif pour le contrôle de la position d'un porte-outil dans le support d'un dispositif changeur d'outils et pour le nettoyage des surfaces d'accouplement entre support et porte-outil

(30) Priorität: 04.07.1987 DE 3722197
(43) Veröffentlichungstag der Anmeldung: 11.01.1989
(73) Patentinhaber: Fried. Krupp Gesellschaft mit beschränkter Haftung, 45143 Essen (DE)
(72) Erfinder: von Haas, Rainer, Dipl.-Ing., D-2054 Geesthacht (DE); Tack, Hans, D-5620 Velbert 1 (DE)
(74) Vertreter: Vomberg, Friedhelm, Dipl.-Phys.

(56) Entgegenhaltungen:
- DE-A- 2 632 228
- DE-A- 2 754 636
- US-A- 3 358 096
- US-A- 3 593 614
- US-A- 3 595 109
- US-A- 3 603 203
- US-A- 4 480 366
- US-A- 4 504 824
- US-A- 4 664 571
- US-E- 26 623

## Beschreibung

Verfahren zur Kontrolle der Position eines Werkzeugträgers in einem Werkzeuggrundhalter einer Werkzeugwechseleinrichtung sowie zur Reinigung der Kupplungsflächen zwischen Werkzeuggrundhalter und Werkzeugträger und Werkzeugwechseleinrichtung

Die Erfindung betrifft ein Verfahren zur Kontrolle der Position eines Werkzeugträgers in einem Werkzeuggrundhalter einer Werkzeugwechseleinrichtung und eine Werkzeugwechseleinrichtung nach den Oberbegriffen der Ansprüche 1 und 2.

In der US-A-4 504 824 wird beschrieben, Druckluft zu einer durch eine Reihe von Bohrungen in der Spindel gebildete Punkte in die Aufnahmebohrung eines Werkzeuggrundhalters zuzuführen, wobei diese Bohrungen verschlossen werden, wenn ein Werkzeugträgerzapfen in die Aufnahmebohrung eingeführt wird. Kommt es aufgrund eines unkorrekten Sitzes des Werkzeugträgerzapfens in der Aufnahmebohrung des Werkzeuggrundhalters zu einem unvollständigen Verschließen der Druckluftzuführbohrungen, wird aufgrund des fehlenden Druckluftanstieges in den Zuführleitungen ein Warnsignal abgegeben. Nachteiligerweise wird die Druckluft über ringförmig verteilte Bohrungen lediglich in den unteren Bereich der Aufnahmebohrung der Spindel geleitet, wo sie austritt. Der übrige Mantelbereich der Spindel einschließlich des Spindelgrundes besitzt hingegen keine Bohrungen zum Ausströmen von Druckluft.

Bei vielen Werkzeugmaschinen wird der Werkzeugwechsel mit Hilfe einer automatischen Werkzeugwechseleinrichtung durchgeführt. Das Werkzeug wird dabei z.B. durch einen von der Werkzeugmaschine unabhängig operierenden Schwenkarm ausgewechselt. Bei diesem Vorgang werden Kupplungsflächen zwischen Werkzeugträger und Werkzeuggrundhalter häufig durch hereinfallende Späne oder anderen Schmutz verunreinigt. Das neue Werkzeug kann dann in den verschmutzten Werkzeuggrundhalter gar nicht oder nur fehlerhaft eingebaut werden. Der sichere und störungsfreie Betrieb der Werkzeugmaschine ist damit nicht mehr gewährleistet, die automatische Fertigung wird unterbrochen.

Es ist deshalb Aufgabe der vorliegenden Erfindung, ein Verfahren anzugeben, das die automatische Reinigung der Kupplungsflächen zwischen Werkzeugträger und Werkzeuggrundhalter ermöglicht und gleichzeitig die funktionssichere Positionierung des eingewechselten Werkzeuges überprüft. Ferner ist es Aufgabe der vorliegenden Erfindung, eine hierzu geeignete Werkzeugwechseleinrichtung anzugeben.

Die Lösung dieser Aufgabe besteht erfindungsgemäß in einem Verfahren zur Kontrolle der Position eines Werkzeugträgers in einem Werkzeuggrundhalter einer Werkzeugwechseleinrichtung, wobei Druckluft über einen oder mehrere Ringkanäle in der konischen Aufnahmebohrung des Werkzeuggrundhalters zugeführt wird und bei in die Aufnahmebohrung des Werkzeuggrundhalters eingeführtem Spannzapfen des Werkzeugträgers durch die Druckluftzufuhr ein Staudruck entsteht, der von der Werkzeugmaschine als Steuersignal für die Freigabe bzw. Blockierung des nächsten Arbeitsganges registriert wird, wobei die Neuerung dadurch gekennzeichnet ist, daß der Aufnahmebohrung des Werkzeuggrundhalters über ein System von Bohrungen und Ausfräsungen im Werkzeuggrundhalter Druckluft so zugeführt wird, daß sie sich ringförmig in der Aufnahmebohrung verteilt und die Aufnahmebohrung sowie den gesamten Bereich der Passung zwischen Werkzeuggrundhalter und Werkzeugträger beim Einbau des ebenfalls konisch ausgebildeten Spannzapfens reinigt, so daß die Aufnahmebohrung und der gesamte Bereich der Passung zwischen dem Werkzeuggrundhalter und dem Werkzeugträger beim Einbau des ebenfalls konisch ausgebildeten Spannzapfens gereinigt wird. Grundsätzlich war aus der DE-A-27 54 636 eine Reinigungsvorrichtung für Werkzeugspannkegel bekannt, die über ihre Hüllfläche verteilte Luftaustrittsöffnungen besitzt, die mit einer Druckluftzuführungen verbunden sind. Diese separate Reinigungsvorrichtung als Ablaßvorrichtung hat jedoch den Nachteil, daß zur Reinigung das Werkzeug bzw. der zu reinigende Aufnahmezapfen erst in die Reinigungsvorrichtung und danach zum Einspannen zu führen, wo dann ggf. der korrekte Sitz mittels der in der US-A-4 504 824 bekannten Vorrichtung überprüfbar ist. Erst die vorliegende Erfindung ermöglicht es, gleichzeitig die funktionssichere Positionierung des eingewechselten Werkzeuges zu überprüfen und die Kupplungsflächen zwischen dem Werkzeugträger und dem Werkzeuggrundhalter automatisch zu reinigen.

Die obenstehende Aufgabe wird ferner durch eine Werkzeugwechseleinrichtung mit einem Werkzeuggrundhalter gelöst, der eine konisch ausgeführte Aufnahmebohrung aufweist, in die ein entsprechend konisch ausgebildeter Zapfen des Werkzeugträgers aufnehmbar ist, wobei zur Kontrolle der Position des Werkzeugträgers in dem Werkzeuggrundhalter Druckluft über einen oder mehrere Ringkanäle in der konischen Aufnahmebohrung des Werkzeuggrundhalters zuführbar ist und bei der bei in die Aufnahmebohrung des Werkzeuggrundhalters eingeführtem Spannzapfen des Werkzeugträgers durch die Druckluftzufuhr ein Staudruck entsteht, der von der Werkzeugmaschine als Steuersignal die Freigabe bzw. Blockierung des nächsten Arbeitsganges registrierbar ist. Die erfindungsgemäße Neuerung besteht darin, daß in dem Werkzeuggrundhalter ein System von Bohrungen aus Ausfräsungen zur ringförmigen Verteilung von Druckluft innerhalb der Aufnahmebohrung vorgesehen ist, wobei dieses System durch einen Adapter mit einer Leitung zur Zufuhr von Druckluft verbunden ist und die Aufnahmebohrung und der gesamte Bereich der Passung zwischen Werkzeuggrundhalter und Werkzeugträger beim Einbau des Spannzapfens sowie die die Plananlage bildende Planflächen und des Werkzeugträgers und des Werkzeuggrundhalters reinigbar sind, wobei die Kante, die durch die Mantelfläche und die Planfläche des Werkzeugträgers gebildet wird, mit einem Freistich versehen ist.

Weiterbildungen der erfindungsgemäßen Werkzeugwechseleinrichtung sind in den Ansprüchen 3 und 4 beschrieben.

Durch die mit hoher Geschwindigkeit ausströmende Luft wird bei der vorliegenden Erfindung der gesamte Werkzeuggrundhalter vorgereinigt. Beim Einführen des ebenfalls konisch ausgebildeten Spannzapfens des Werkzeugträgers wird durch die Mantelflächen der Aufnahmebohrung und des Spannzapfens ein Ringspalt gebildet, der sich immer mehr einengt. Durch diesen ringförmigen Querschnitt tritt die Druckluft mit zunehmender Geschwindigkeit aus und reinigt so die Passungen der Werkzeugaufnahme im Bereich der Mantelflächen. Durch einen Freistich entlang der Kante, die durch die Mantelfläche und die Planfläche des Werkzeugträgers gebildet wird und eine Fase entland der Kante, die durch Mantel- und Planfläche des Werkzeuggrundhalters gebildet wird, entsteht ein weiterer ringförmiger Querschnitt im Bereich der Planflächen von Werkzeugträger und Werkzeuggrundhalter. Dieser Ringspalt ist durch eine radiale Bohrung mit der Druckluftzufuhr zum Werkzeuggrundhalter verbunden. Ist der Ringspalt zwischen den Mantelflächen von Werkzeuggrundhalter und Werkzeugträger geschlossen, strömt die Druckluft durch die radiale Bohrung hauptsächtlich in den aus Freistich und Fase gebildeten Ringspalt ein und reinigt dort die Planflächen zwischen Werkzeugkopf und Werkzeuggrundhalter. Anschließend wird die Spannschraube des Spannteiles angezogen und der Ringspalt zwischen den Planflächen von Werkzeugträger und Werkzeuggrundhalter geschlossen. Durch die weiter einströmende Luft wird ein Staudruck verursacht, der von der Maschinensteuerung registriert wird. Ist der Staudruck ausreichend hoch, wird die Maschine für den weiteren Betrieb freigegeben. Wird keine exakte Plananlage des Werkzeugkopfes erreicht, entstehen Druckverluste, die ein Fehlsignal verursachen. Die Werkzeugmaschine wird für den nächsten Arbeitsgang gesperrt.

Ein Ausführungsbeispiel des erfindungsgemäßen Verfahrens und der Werkzeugwechseleinrichtung wird anhand von Zeichnungen näher beschrieben, und zwar zeigt
- Fig. 1: den Werkzeugträger und den Werkzeuggrundhalter mit angeschlossenem Steuermodul, PC und der Maschinensteuerung in schematischer Darstellung,
- Fig. 2: die Positionierung des Werkzeuges in dem Werkzeughalter und das Reinigen des Werkzeuggrundhalters mit Druckluft im Schnittbild,
- Fig. 3: eine Einzelheit aus Fig. 2.

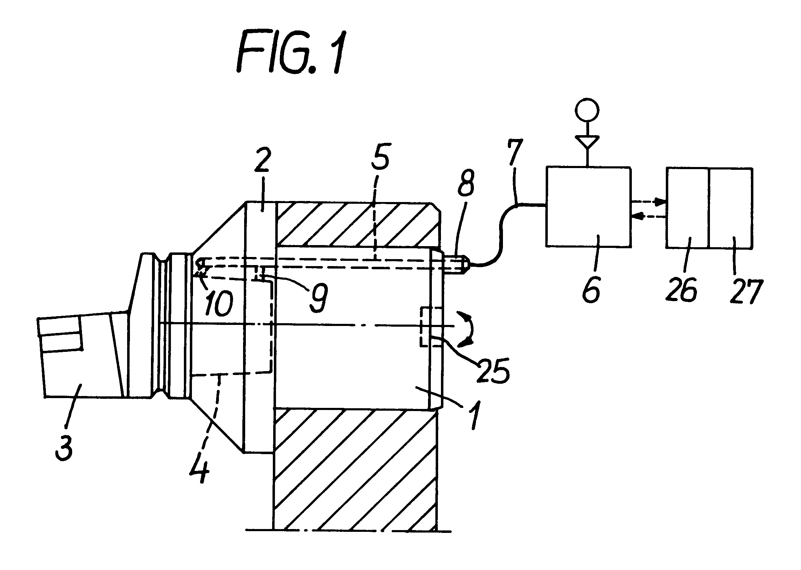

Die in Fig. 1 dargestellte Werkzeugeinrichtung besteht im wesentlichen aus dem Werkzeugschaft 1, dem Werkzeuggrundhalter 1 und dem Werkzeugträger 3, der hier als Schneidwerkzeug ausgebildet ist. Der Werkzeugträger 3 wird in einer zentrischen, konisch ausgebildeten Aufnahmebohrung 4 durch ein Spannteil mit dem Werkzeuggrundhalter verbunden. Durch eine Bohrung 5 kann Druckluft in den Werkzeugschaft und die Aufnahmebohrung eingeleitet werden. Die Druckluft wird dem Werkzeugschaft über das Steuermodul 6, die Schlauchleitung 7 und den Adapter 8 zugeführt.

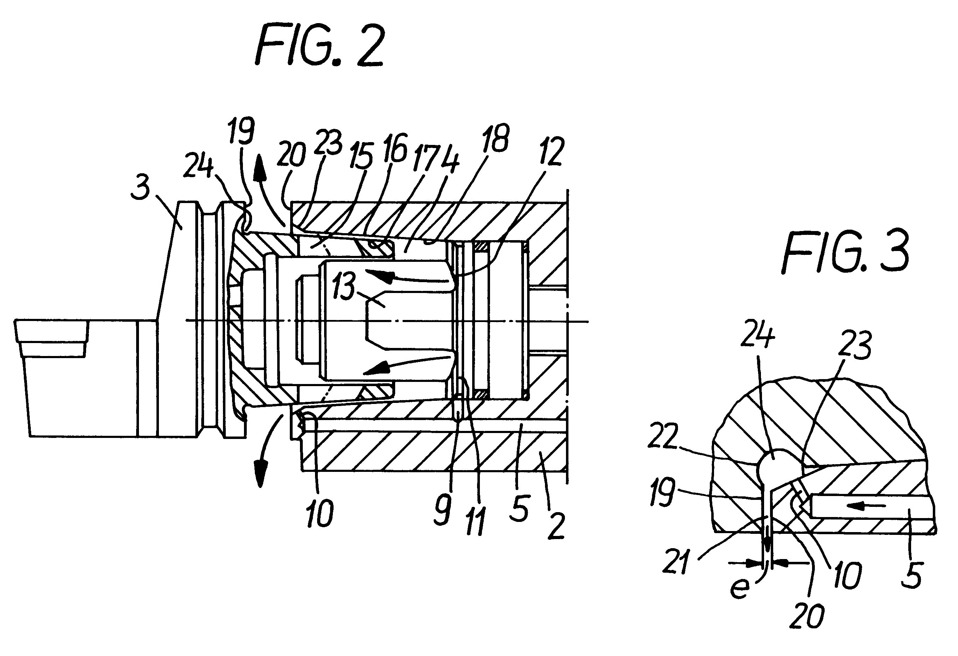

Die automatische Reinigung des Werkzeugsystems ist in Fig. 2 und 3 dargestellt:
Nach Entnahme des Werkzeugträgers 3 aus dem Werkzeuggrundhalter 2 wird - automatisch - Druckluft in die Bohrung 5 des Werkzeugschaftes 1 eingeleitet und erreicht die Aufnahmebohrung der Kupplungsstelle über die Bohrungen 9 und 10. Die aus Bohrung 9 austretende Druckluft wird von der Ringnut 11 aufgenommen und über vier Ausfräsungen 12 auf den ringförmigen Innenraum der Aufnahmebohrung verteilt. Dadurch wird zunächst besonders im Bereich der Mitnehmer 13 des Spannteiles eine reinigende Wirkung erzielt.

Beim Einführen des konischen Spannzapfens 15 des Werkzeugträgers 3 in die ebenfalls konische Aufnahmebohrung 4 des Werkzeuggrundhalters 2 wird durch die Mantelfläche der Aufnahmebohrung 4 und des Spannzapfens 15 ein Ringspalt 16 gebildet, der sich immer mehr einengt. Durch diesen ringdüsenförmigen Querschnitt tritt die Druckluft mit zunehmender Geschwindigkeit aus und reinigt den Passungsbereich der Werkzeugaufnahme.
Der Luftstrom durch diesen Ringspalt hält so lange an, bis die Mantelfläche des Werkzeugträgers 17 und der Aufnahmebohrung 18 zusammentreffen. Die Blasluft strömt nun hauptsächlich durch die Bohrungen 5 und 10 und tritt in den ringförmigen Querschnitt 24 (s. Fig. 3), der durch den Freistich 22 und die Fase 23 gebildet wird. Aufgrund eines geringen Übermaßes des konischen Spannzapfens 15 des Werkzeugträgers 3 gegenüber der Aufnahmebohrung 4 verbleibt zunächst ein kleiner Spalt 21 zwischen den Planflächen 19, 20 dieser Bauteile. Aus diesem Spalt 21 tritt die Luft fächerförmig aus und reinigt die Planflächen zwischen Werkzeugkopf und Werkzeuggrundhalter.

Nach der Reinigung des Werkzeugsystems wird das eingewechselte Werkzeug folgendermaßen auf die funktionssichere Positionierung überprüft: Durch Anziehen der Spannschraube 25 werden die Planflächen 19, 20 aneinandergepreßt und der Spalt 21 verschlossen. Durch die weiter einströmende Luft wird ein Staudruck verursacht, der von dem im Steuermodul 6 integrierten Druckbegrenzungsschalter registriert und über die PC 26 der Maschinensteuerung 27 mitgeteilt wird. Ist der registrierte Staudruck ausreichend hoch, wird die Maschine für den weiteren Betrieb freigegeben.

Wird keine exakte Plananlage des Werkzeugkopfes erreicht, z.B. infolge Verunreinigung oder Deformierung, entweicht weiterhin Luft durch den Spalt 21. Der hierdurch verursachte Druckverlust wird ebenfalls vom Druckbegrenzungsschalter registriert und der Maschinensteuerung 26 mitgeteilt. Wegen des Fehlsignales wird die Maschine nicht für den nächsten Arbeitsgang freigegeben.

## Patentansprüche

1. Verfahren zur Kontrolle der Position eines Werkzeugträgers (3) in einem Werkzeuggrundhalter (2) einer Werkzeugwechseleinrichtung, wobei Druckluft über einen oder mehrere Ringkanäle in der konischen Aufnahmebohrung des Werkzeuggrundhalters (2) zugeführt wird und bei in die Aufnahmebohrung (4) des Werkzeuggrundhalters (2) eingeführtem Spannzapfen (15) des Werkzeugträgers (3) durch die Druckluftzufuhr ein Staudruck entsteht, der von der Werkzeugmaschine als Steuersignal für die Freigabe bzw. Blockierung des nächsten Arbeitsganges registriert wird,
**dadurch gekennzeichnet,**
daß der Aufnahmebohrung (4) des Werkzeuggrundhalters (2) über ein System von Bohrungen (9, 10) und Ausfräsungen (12, 22) im Werkzeuggrundhalter Druckluft so zugeführt wird, daß sie sich ringförmig in der Aufnahmebohrung (4) verteilt und die Aufnahmebohrung (4) sowie den gesamten Bereich der Passung zwischen Werkzeuggrundhalter (2) und Werkzeugträger (3) beim Einbau des ebenfalls konisch ausgebildeten Spannzapfens (15) reinigt, so daß die Aufnahmebohrung (4) und der gesamte Bereich der Passung zwischen dem Werkzeuggrundhalter (2) und dem Werkzeugträger beim Einbau des ebenfalls konisch ausgebildeten Spannzapfens (15) gereinigt wird.

2. Werkzeugwechseleinrichtung mit einem Werkzeuggrundhalter (2), der eine konisch ausgeführte Aufnahmebohrung (4) aufweist, in die ein entsprechend konisch ausgebildeter Zapfen (15) des Werkzeugträgers (3) aufnehmbar ist, wobei zur Kontrolle der Position des Werkzeugträgers (3) in dem Werkzeuggrundhalter (2) Druckluft über einen oder mehrere Ringkanäle in der konischen Aufnahmebohrung des Werkzeuggrundhalters (2) zuführbar ist und bei der bei in die Aufnahmebohrung (4) des Werkzeuggrundhalters (2) eingeführtem Spannzapfen (15) des Werkzeugträgers (3) durch die Druckluftzufuhr ein Staudruck entsteht, der von der Werkzeugmaschine als Steuersignal für die Freigabe bzw. Blockierung des nächsten Arbeitsganges registrierbar ist,
**dadurch gekennzeichnet,**
daß in dem Werkzeuggrundhalter (2) ein System von Bohrungen (9, 10) und Ausfräsungen (12, 22) zur ringförmigen Verteilung von Druckluft innerhalb der Aufnahmebohrung (4) vorgesehen ist, daß dieses System durch einen Adapter (8) mit einer Leitung (7) zur Zufuhr von Druckluft verbunden ist und daß die Aufnahmebohrung (4) und der gesamte Bereich der Passung zwischen Werkzeuggrundhalter (2) und Werkzeugträger (3) beim Einbau des Spannzapfens (15) sowie die die Plananlage bildenden Planflächen (19) und (20) des Werkzeugträgers (3) und des Werkzeuggrundhalters (2) reinigbar sind, wobei die Kante, die durch die Mantelfläche (17) und die Planfläche (19) des Werkzeugträgers (3) gebildet wird, mit einem Freistich (22) versehen ist.

3. Werkzeugwechseleinrichtung nach Anspruch 2, dadurch gekennzeichnet, daß die Kante, die durch die Mantelfläche (16) und die Planfläche (20) des Werkzeuggrundhalters (2) gebildet wird, mit einer Fase (23) versehen ist.

4. Werkzeugwechseleinrichtung nach Anspruch 2 und 3, dadurch gekennzeichnet, daß der Spannzapfen (15) des Werkzeugträgers (3) ein geringfügiges Übermaß gegenüber der Aufnahmebohrung (4) hat.

## Claims

1. Method for checking the position of a tool carrier (3) in a basic toolholder (2) of a tool changing mechanism, in which compressed air is supplied by means of one or more ring channels into the conical seating bore of the toolholder (2) and when the trunnion (15) of the tool carrier (3) is introduced into the seating bore (4) of the basic toolholder (2) as a result of the compressed air supply a dynamic pressure occurs, which is recorded by the machine tool as a control signal for the release or blocking of the next operation, characterized in that the seating bore (4) of the basic toolholder (2) is so supplied with compressed air by means of a system of bores (9,10) and milled-out portions (12,22) in the basic toolholder, that it is distributed in annular manner in the seating bore (4) and cleans the seating bore (4) and the entire area of fit between the toolholder (2) and the tool carrier (3) on fitting the also conically constructed trunnion (15), so that the seating bore (4) and the entire area of fit between the basic toolholder (2) and the tool carrier is cleaned on fitting the also conically constructed trunnion (15).

2. Tool changing mechanism with a basic toolholder (2), which has a conically constructed seating bore (4), in which can be received a correspondingly conically constructed trunnion (15) of the tool carrier (3) and for checking the position of the tool carrier (3) in the basic toolholder (2) compressed air can be supplied by means of one or more ring channels in the conical seating bore of the toolholder (2) and when the trunnion (15) of the tool carrier (3) is inserted in the seating bore (4) of the toolholder (2) the compressed air supply leads to the formation of a dynamic pressure, which can be recorded by the machine tool as a control signal for the release or blocking of the next operation, characterized in that the basic toolholder (2) contains a system of bores (9,10) and milled-out portions (12,22) for the annular distribution of compressed air within the seating bore (4), that said system is connected by an adaptor (8) to a line (7) for the supply of compressed air and that the seating bore (4) and the entire area of the fit between the basic toolholder (2) and the tool carrier (3) can be cleaned on fitting the trunnion (15) and the faces (19,20) of the tool carrier (3) and the toolholder (2) forming the face or planar engagement, the edge formed by the circumferential surface (17) and the face (19) of the tool carrier (3) being provided with a free-cut (22).

3. Tool changing mechanism according to claim 2, characterized in that the edge formed by the circumferential surface (16) and the face (20) of the basic toolholder (2) is provided with a chamfer (23).

4. Tool changing mechanism according to claims 2 and 3, characterized in that the trunnion (15) of the tool carrier (3) has a slight oversize compared with the seating bore (4).

## Revendications

1. Procédé de contrôle de la position d'un porte-outil (3) dans le support d'un porte-outil (2) d'un dispositif changeur d'outil, pour lequel de l'air comprimé est envoyé, par un ou plusieurs canaux dans l'alésage de réception conique du support d'un porte-outil (2), et pour lequel, quand la broche de serrage (15) du porte-outil (3) est introduite dans l'alésage de réception (4) du support de porte-outil (2), il se produit, par suite de l'arrivée d'air, une pression dynamique, enregistrée par la machine-outil comme signal de commande pour respectivement libérer ou bloquer la prochaine opération d'usinage,
caractérisé en ce que
de l'air comprimé est envoyé à l'alésage de réception (4) du support de porte-outil (2) par un système d'alésages (9, 10) et de fraisages (12, 22) dans le support de porte-outil, de façon à se répartir en formant un anneau dans l'alésage de réception (4) et à nettoyer l'alésage de réception (4), ainsi que toute la zone d'ajustage entre support de porte-outil (2) et porte-outil (3) lors du montage de la broche de serrage (15), réalisée également conique, de telle façon que l'alésage de réception (4) et toute la zone d'ajustage entre support de porte-outil (2) et porte-outil (3) sont nettoyés lors du montage de la broche de serrage (15), réalisée également conique.

2. Dispositif changeur d'outil comportant un support de porte-outil (2) qui présente un alésage de réception (4) réalisé conique, dans lequel peut être reçue la broche (15) du porte-outil (3), réalisée avec un cône correspondant, étant entendu que, pour le contrôle de la position du porte-outil (3) dans le support de porte-outil (2), de l'air comprimé peut être envoyé, par un ou plusieurs canaux annulaires, dans l'alésage de réception conique du support de porte-outil (2), et, lorsque la broche de serrage (15) du porte-outil (3) est introduite dans l'alésage de réception (4) du support de porte-outil (2), il se produit, par suite de l'arrivée d'air, une pression dynamique, enregistrée par la machine-outil comme signal de commande pour respectivement libérer ou bloquer la prochaine opération d'usinage,
caractérisé en ce que,
dans le support de porte-outil (2), il est prévu un système d'alésages (9, 10) et de fraisages (12, 22) pour répartir, sous forme d'anneau, de l'air comprimé à l'intérieur de l'alésage de réception (4), en ce que, pour l'alimentation en air comprimé, ce système est raccordé avec une conduite (7) au moyen d'un adaptateur (8), et en ce que l'alésage de réception (4) et toute la zone d'ajustage entre support de porte-outil (2) et porte-outil (3) lors du montage de la broche de serrage (15), ainsi que les surfaces planes (19) et (20) constituant l'appui plan du porte-outil (3) et du support de porte-outil (2), peuvent être nettoyés, étant entendu que l'arète formée par la surface externe (17) et la surface plane (19) du porte-outil (3) est munie d'une gorge de dégagement (22).

3. Dispositif changeur d'outil suivant la revendication 2, caractérisé en ce que l'arète formée par la surface externe (17) et la surface plane (19) du support de porte-outil (2) est munie d'un chanfrein (23).

4. Dispositif changeur d'outil suivant la revendication 2 ou la revendication 3, caractérisé en ce que la broche de serrage (15) du porte-outil (3) présente un faible surdimensionnement par rapport à l'alésage de réception (4).
